Europäisches Patentamt

European Patent Office

Office européen des brevets

(19)

(11) Veröffentlichungsnummer: **0 022 994**

**A1**

# (12) EUROPÄISCHE PATENTANMELDUNG

(21) Anmeldenummer: **80104002.3**

(22) Anmeldetag: **11.07.80**

(51) Int. Cl.³: **C 08 G 18/14**
C 08 G 18/32, C 08 G 18/10
C 08 J 9/06

(30) Priorität: **13.07.79 DE 2928357**

(43) Veröffentlichungstag der Anmeldung:
**28.01.81 Patentblatt 81/4**

(84) Benannte Vertragsstaaten:
**AT BE CH FR GB IT LI NL SE**

(71) Anmelder: **METZELER KAUTSCHUK GMBH**
**Westendstrasse 131**
**D-8000 München 2(DE)**

(72) Erfinder: **Blahak, Johannes, Dr.**
**Gautinger Strasse 3**
**D-8035 Gauting-Buchendorf(DE)**

(74) Vertreter: **Michelis, Theodor, Dipl.-Ing.**
**Westendstrasse 131**
**D-8000 München 2(DE)**

(54) **Zellige Elastomerschäume und Verfahren zu ihrer Herstellung.**

(57) Bei der Herstellung eines Elastomerschaums durch Vernetzung eines Polyurethan- und/oder Polyharnstoff-Prepolymeren mit einem Polyamin-Kettenverlängerungsmittel wird ein Treibmittel mit einer Gas bildenden Komponente verwendet, die mit dem Polyamin-Kettenverlängerungsmittel oder dessen Umsetzungsprodukten mit Polyisocyanaten reaktionsfähig ist.

EP 0 022 994 A1

Croydon Printing Company Ltd.

METZELER KAUTSCHUK GMBH          Unser Zeichen: MK 305 P 79 EP
München                                          PAT

Zellige Elastomerschäume und Verfahren
zu ihrer Herstellung

Die Erfindung betrifft neue offen- und/oder geschlossenzellige
Elastomerschäume und ein Verfahren zu ihrer Herstellung.

Bekanntlich können Polyurethanelastomere aus Polyolen, 1,5-
Naphthylendiisocyanat, Vernetzern, wie z.B. Wasser, und/oder
Treibmitteln zu hochelastischen Elastomerschäumen verarbeitet
werden, die Stoßbelastungen mit Stauchungen bis zu 80 % ohne
Beschädigung aushalten. Aus diesem Grund werden solche Elastomerschäume, die dynamisch hochbelastbar sind, im Kraftfahrzeugbau
verwendet, beispielsweise für Anschlagpuffer (in erster Linie
Elastomerschäume der Vulkollan(R)-Typen).

Es ist ferner bekannt, daß Prepolymere aus Polytetrahydrofuranpolyolen oder deren Gemischen und Polyisocyanaten in Gegenwart
oder Abwesenheit von Katalysatoren und Treibmitteln mit Kettenverlängerungsmitteln, vorzugsweise Polyaminen (z.B. Moca(R) und
Caytur/7(R)) zu Elastomerschäumen verarbeitet werden können (Elastomerschäume der Adiprene(R)-Typen).

Während die Elastomerschäume der Vulkollan(R)-Typen eine übermäßig
hohe Wasseraufnahme, eine geringe Kälte- und Hydrolysebeständigkeit
sowie eine verhältnismäßig lange Formstandzeit in verschlossenen
Formen aufweisen, besitzen die Elastomerschäume der Adiprene(R)-
Typen eine unzureichende Sauerstoff- und Ozonbeständigkeit, die
darin enthaltenen Polyamin-Kettenverlängerungsmittel sind toxisch
und es ist schwierig, ihr Raumgewicht und ihre Zellstruktur
allein über verdampfende oder sich thermisch zersetzende Treibmittel einzustellen, die wegen ihres notwendigerweise tiefen Zersetzungspunktes ($< 100^{o}$C) explosionsgefährlich sind und überdies nur als Suspension angewendet werden können. Wenn man nun versucht, über die Reaktion mit Isocyanat und Wasser Kohlendioxid als zusätzliches Treibgas zu erzeugen, so erhält man in diesem System verschiedenartig aufgebaute Hartsegmente in der Polymermatrix, welche die stark abstandssensitive Wasserstoffbrückenbildung in dem Hartsegment stören und zu einem raschen Absinken des physikalischen Werteniveaus führen.

Aufgabe der Erfindung war es daher, neue Elastomerschäume zu entwickeln, welche die Mängel der bisher bekannten Elastomerschäume nicht aufweisen, insbesondere eine geringere Wasseraufnahme, eine bessere Hydrolysebeständigkeit und bessere Tieftemperatureigenschaften besitzen.

Es wurde nun gefunden, daß diese Aufgabe erfindungsgemäß gelöst werden kann mit einem offen- und/oder geschlossenzelligen Elastomerschaum, der dadurch gekennzeichnet ist, daß er hergestellt worden ist durch Verschäumen eines mit einem Polyamin vernetzbaren Polyurethan- und/oder Polyharnstoff-Prepolymeren in Gegenwart eines Treibmittels oder eines Treibmittelgemisches, das zumindest anteilig eine mit dem Polyamin-Kettenverlängerungsmittel oder dessen Umsetzungsprodukten mit Polyisocyanaten reaktionsfähige gasbildende Komponente enthält, in Gegenwart oder in Abwesenheit von die Polyharnstoffbildung katalysierenden Substanzen und/oder oberflächenaktiven Substanzen und/oder weiteren Zusätzen bis zur Erzielung der gewünschten Dichte.

Ein solcher offen- und/oder geschlossenzelliger Elastomerschaum kann nach einem einen weiteren Gegenstand der Erfindung bildenden Verfahren hergestellt werden, das dadurch gekennzeichnet ist, daß ein mit einem Polyamin vernetzbares Polyurethan- und/der Polyharnstoff-Prepolymer in Gegenwart eines Treibmittels oder eines Treibmittelgemisches, das zumindest anteilig eine mit dem Polyamin-Kettenverlängerungsmittel oder dessen Umsetzungsprodukten mit Polyisocyanaten reaktionsfähige gasbildende Komponenten enthält, in Gegenwart oder in Abwesenheit von die Polyharnstoffbildung katalysierenden Substanzen und/oder oberflächenaktiven Substanzen und/oder weiteren Zusätzen zu einem Polyurethan- bzw. Polyharnstoff-Elastomerschaum der gewünschten Dichte verschäumt wird.

Die erfindungsgemäßen neuen offen- und/der geschlossenzelligen Elastomerschäume stellen ausgezeichnete Produkte mit einer geringen Wasseraufnahme, einer guten Hydrolysebeständigkeit und guten Tieftemperatureigenschaften dar, die den bisher überwiegend verwendeten Elastomerschäumen vom Vulkollan®-Typ diesbezüglich weit überlegen sind. Durch entsprechende Zusätze können sie auch gegen $O_2/O_3$-Alterung stabilisiert werden.

Es hat sich nämlich überraschend gezeigt, daß durch die anteilig mit den Polyamin-Kettenverlängerungsmitteln oder deren Umsetzungsprodukten reaktionsfähigen gasbildenden Treibmittel keine Verschlechterung des mechanischen Werteniveaus der erfindungsgemäßen Strukturschäume erzielt wird, während gleichzeitig die Möglichkeit besteht, die Dichte der Strukturschäume über deren Konzentration in weiten Grehzen zu variieren. Insbesondere erhält man mit den wirtschaftlichen Polypropylenoxidpolyolen, vorzugsweise nach dem Prepolymerverfahren, und reaktionsfähigen niedrigschmelzenden Polyaminen qualitativ hochwertige Elastomerschäume. Bei ihnen entfällt die lange Formstandzeit und die Nachtemperzeit kann gegenüber den Elastomerschäumen vom Vulkollan®- und Adiprene®-Typ stark verkürzt werden.

Die erfindungsgemäßen neuen Elastomerstrukturschäume eignen sich für die verschiedensten Anwendungszwecke, beispielsweise für Federelemente, dynamisch belastbare Dichtungen, Schallabsorber, Hinterschäumungen jeglicher Art, für Polster, Karrenreifen, Sandwich-Strukturen, z.B. Bauelemente, Surfbretter und dgl..Weitere bevorzugte Anwendungsgebiete sind Schuhsohlen, Einlagen und Teile, die bisher aus Moosgummi gefertigt wurden.

Als Ausgangskomponenten für die erfindungsgemäß eingesetzten Polyurethan- und/oder Polyharnstoffprepolymeren werden Verbindungen mit mindestens zwei gegenüber Isocyanaten reaktionsfähigen Wasserstoffatomen eingesetzt, die im allgemeinen ein Molekulargewicht innerhalb des Bereiches von 400 bis 10 000 aufweisen. Dazu gehören Aminogruppen, Thiolgruppen und/oder Carboxylgruppen aufweisende Verbindungen, vorzugsweise Polyhydroxyverbindungen, insbesondere solche mit 2 bis 8 Hydroxylgruppen, speziell solche mit einem Molekulargewicht von 800 bis 10 000, vorzugsweise 1000 bis 6000, beispielsweise mindestens 2, in der Regel 2 bis 8, vorzugsweise 2 bis 4 Hydroxylgruppen aufweisende Polyester, Polyäther, Polythioäther, Polyacetale, Polycarbonate, Polyesteramide, wie sie für die Herstellung von homogenen und zellförmigen Polyurethanen an sich bekannt sind.

Bei den verwendbaren, Hydroxygruppen aufweisenden Polyestern
handelt es sich beispielsweise um Umsetzungsprodukte von mehrwertigen, vorzugsweise zweiwertigen und gegebenenfalls zusätzlich
dreiwertigen Alkoholen mit mehrwertigen, vorzugsweise zweiwertigen
Carbonsäuren. Anstelle der freien Polycarbonsäuren können auch die
entsprechenden Polycarbonsäureanhydride oder entsprechende
Polycarbonsäureester von niederen Alkoholen oder deren Gemische
zur Herstellung der Polyester verwendet werden. Die Polycarbonsäuren
können aliphatischer, cycloaliphatischer, aromatischer und/oder
heterocyclischer Natur sein und gegebenenfalls beispielsweise
durch Halogenatome substituiert und/oder ungesättigt sein. Geeignete Beispiele sind Bernsteinsäure, Adipinsäure, Korksäure,
Azelainsäure, Sebazinsäure, Phthalsäure, Isophthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren, wie Ölsäure, gegebenenfalls in Mischung mit monomeren
Fettsäuren, Terephthalsäuredimethylester, Terephthalsäurebisglykolester. Beispiele für verwendbare mehrwertige Alkohole sind Äthylenglykol, Propylenglykol-(1,2) und -(1,3), Butylenglykol-(1,4) und
-(2,3), Hexandiol-(1,6), Octandiol-(1,8), Neopentylglykol,
Cyclohexandimethanol (1,4-Bishydroxymethylcyclohexan), 2-
Methyl-1,3-propandiol, Glycerin, Trimethylolpropan, Hexantriol-(1,2,6),
Butantriol-(1,2,4), Trimethyloläthan, Pentaerythrit, Chinit,
Mannit und Sorbit, Methylglykosit, ferner Diäthylenglykol, Triäthylenglykol, Tetraäthylenglykol, Polyäthylenglykole, Dipropylenglykol, Polypropylenglykole, Dibutylenglykol und Polybutylenglykole. Die Polyester können anteilig endständige Carboxylgruppen

aufweisen. Verwendbar sind auch Polyester aus Lactonen, wie z.B.
ε-Caprolacton oder Hydroxycarbonsäuren, wie ω-Hydroxycapronsäure.

Bei den erfindungsgemäß verwendbaren, mindestens 2, in der Regel 2
bis 8, vorzugsweise 3 bis 8 Hydroxylgruppen aufweisenden Polyäthern
handelt es sich um solche der an sich bekannten Art und sie werden
beispielsweise durch Polymerisation von Epoxiden, wie Äthylenoxid,
Propylenoxid, Butylenoxid, Tetrahydrofuran, Styroloxid oder Epichlorhydrin, mit sich selbst, beispielsweise in Gegenwart von
$BF_3$, oder durch Anlagerung dieser Epoxide, gegebenenfalls im
Gemisch oder nacheinander, an Startkomponenten mit reaktionsfähigen Wasserstoffatomen wie Alkohole oder Amine, z.B. Wasser,
Äthylenglykol, Propylenglykol-(1,3) oder -(1,2), Trimethylolpropan, 4,4'-Dihydroxydiphenylpropan, Anilin, Ammoniak, Äthanolamin, Äthylendiamin, hergestellt. Auch Saccharosepolyäther, wie sie
z.B. in den deutschen Auslegeschriften 1 176 358 und 1 064 938
beschrieben sind, können verwendet werden. Vielfach sind solche
Polyäther bevorzugt, die überwiegend (bis zu 90 Gew.-%, bezogen
auf alle vorhandenen OH-Gruppen in dem Polyäther) primäre OH-
Gruppen aufweisen. Auch durch Vinylpolymerisate modifizierte
Polyäther, wie sie z.B. durch Polymerisation von Styrol, Acrylnitril in Gegenwart von Polyäthern entstehen, sind verwendbar
(vgl. US-Patentschriften 3 383 351, 3 304 273, 3 523 093,
3 110 695, deutsche Patentschrift 1 152 536) ebenso wie OH-
Gruppen aufweisende Polybutadiene.

Beispiele für verwendbare Polythioäther sind insbesondere die
Kondensationsprodukte von Thiodiglykol mit sich selbst und/oder
mit anderen Glykolen, Dicarbonsäuren, Formaldehyd, Aminocarbonsäuren oder Aminoalkoholen. Je nach den Cokomponenten handelt es sich bei den Produkten um Polythiomischäther, Polythioätherester und Polythioätheresteramide.

Als Polyacetale kommen beispielsweise die aus Glykolen, wie Diäthylenglykol, Triäthylenglykol, 4,4'-Dioxäthoxydiphenyldimethylmethan, Hexandiol,und Formaldehyd herstellbaren Verbindungen in Frage. Auch durch Polymerisation cyclischer Acetale lassen sich erfindungsgemäß verwendbare geeignete Polyacetale herstellen.

Beispiele für verwendbare, Hydroxylgruppen aufweisende Polycarbonate sind solche der an sich bekannten Art, z.B. diejenigen, die durch Umsetzung von Diolen, wie Propandiol-(1,3), Butandiol-(1,4) und/oder Hexandiol-(1,6), Diäthylenglykol, Triäthylenglykol, Tetraäthylenglykol, mit Diarylcarbonaten, wie Diphenylcarbonat oder Phosgen, hergestellt werden können.

Zu erfindungsgemäß verwendbaren Polyesteramiden und Polyamiden gehören beispielsweise die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate.

Auch bereits Urethan- oder Harnstoffgruppen enthaltende Polyhydroxyverbindungen sowie gegebenenfalls modifizierte natürliche Polyole, wie Rizinusöl, Kohlenhydrate, Stärke, sind verwendbar.. Erfindungsgemäß einsetzbar sind auch Anlagerungsprodukte von Alkylenoxiden an Phenol-Formaldehyd-Harze oder an Harnstoff-

Formaldehyd-Harze.

Vertreter der erfindungsgemäß verwendbaren Verbindungen sind beispielsweise in "High Polymers", Band XVI, "Polyurethanes, Chemistry and Technology", verfaßt von Saunders-Frisch, Interscience Publishers, New York, London, Band I, 1962, S. 32 - 42 und S. 44 - 54, und Band II, 1964, S. 5 - 6 und 198 - 199, sowie im "Kunststoff-Handbuch", Band VII, Vieweg-Höchtlen, Carl-Hanser-Verlag, München, 1966, beispielsweise auf den Seiten 45 bis 71, beschrieben.

Für die Herstellung der erfindungsgemäß verwendbaren Polyurethan- und/oder Polyharnstoffprepolymeren können als weitere Ausgangskomponente aliphatische, cycloaliphatische, araliphatische, aromatische und heterocyclische Polyisocyanate eingesetzt werden, wie sie beispielsweise von W. Siefgen in "Justus Liebigs Annalen der Chemie", 562, S. 75 bis 136, beschrieben sind, wie z.B. Äthylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethylcyclohexan (DE-AS 1 202 785), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4"-

triisocyanat, Polyphenyl-polymethylen-polyisocyanate, wie sie durch Anilin-Formaldehyd-Kondensation und anschließende Phosgenierung erhalten und beispielsweise in den britischen Patentschriften 874 430 und 848 671 beschrieben werden, perchlorierte Arylpolyisocyanate, wie sie beispielsweise in der DE-AS 1 157 601 beschrieben sind, Carbodiimidgruppen aufweisende Polyisocyanate, wie sie in der deutschen Patentschrift 1 092 007 beschrieben sind, Diisocyanate, wie sie in der US-Patentschrift 3 492 330 beschrieben sind, Allophanatgruppen aufweisende Polyisocyanate, wie sie beispielsweise in der britischen Patentschrift 994 890, in der belgischen Patentschrift 761 626 und in der niederländischen Offenlegungsschrift 71 02 524 beschrieben sind, Isocyanuratgruppen aufweisende Polyisocyanate, wie sie beispielsweise in den deutschen Patentschriften 1 022 789, 1 222 067 und 1 027 394 sowie in den deutschen Offenlegungsschriften 1 929 034 und 2 004 048 beschrieben sind, Urethangruppen aufweisende Polyisocyanate, wie sie beispielsweise in der belgischen Patentschrift 752 261 und in der US-Patentschrift 3 394 164 beschrieben sind, acylierte Harnstoffgruppen aufweisende Polyisocyanate, wie sie in der deutschen Patentschrift 1 230 778 beschrieben sind, Biuretgruppen aufweisende Polyisocyanate, wie sie beispielsweise in der deutschen Patentschrift 1 101 394, in der britischen Patentschrift 889 050 und in der französischen Patentschrift 7 017 514 beschrieben sind, durch Telomerisationsreaktionen hergestellte Polyisocyanate, wie sie beispielsweise in der belgischen Patentschrift 723 640 beschrieben sind, Estergruppen aufweisende Polyisocyanate, wie sie beispielsweise in den britischen Patentschriften 956 474 und 1 072 956, in der US-Patentschrift 3 567 763 und in der deutschen Patentschrift 1 231 688 beschrieben sind, sowie Umsetzungsprodukte der oben genannten Isocyanate mit Acetalen, wie sie in der deutschen Patentschrift 1 072 385 beschrieben sind.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, sowie beliebige Mischungen der vorgenannten Polyisocyanate einzusetzen.

Besonders bevorzugt ist in der Regel die Verwendung der technisch leicht zugänglichen Polyisocyanate, wie 2,4- und 2,6-Toluylendiisocyanat, sowie beliebiger Gemische dieser Isomeren (TDI), Polyphenylpolymethylen-polyisocyanate, wie sie durch Anilin-Formaldehyd-Kondensation und anschließende Phosgenierung erhalten werden ("rohes MDI") und Carbodiimidgruppen, Urethangruppen, Allophanatgruppen, Isocyanuratgruppen, Harnstoffgruppen und/oder Biuretgruppen aufweisenden Polyisocyanate (modifizierte Polyisocyanate).

Die erfindungsgemäß verwendeten Polyurethan- und/oder Polyharnstoffprepolymeren können unter Verwendung der vorstehend genannten Ausgangsverbindungen nach an sich bekannten Einstufenverfahren, dem Prepolymerverfahren oder dem Semiprepolymerverfahren, insbesondere nach dem "one-shot-Verfahren" hergestellt werden, wobei man sich häufig maschineller Einrichtungen bedient, z.B. solcher, wie sie in der US-Patentschrift 2 764 565 beschrieben sind. Einzelheiten über die

0022994

Verarbeitungseinrichtungen, die auch erfindungsgemäß verwendet werden können, sind im "Kunststoff-Handbuch" Band VI, herausgegeben von Vieweg und Höchtlen, Carl-Hanser-Verlag, München, 1966, beispielsweise auf den Seiten 121 bis 205 zu finden.

Als Treibmittel werden erfindungsgemäß Wasser und/oder leicht flüchtige organische Substanzen verwendet. Beispiele für verwendbare organische Treibmittel sind Aceton, Äthylacetat, Methanol, Äthanol, halogensubstituierte Alkane, wie Methylenchlorid, Chloroform, Äthylidenchlorid, Vinylidenchlorid, Monofluortrichlormethan, Chlordifluormethan, Dichlordifluormethan sowie Butan, Hexan, Heptan und Diäthyläther. Eine Treibwirkung kann auch durch Zusatz von bei Temperaturen über Raumtemperatur unter Abspaltung von Gasen, wie z.B. Stickstoff, sich zersetzenden Verbindungen, beispielsweise Azoverbindungen wie Azoisobuttersäurenitril, erzielt werden. Weitere Beispiele für geeignete Treibmittel sowie Einzelheiten über die Verwendung solcher Treibmittel sind im "Kunststoff-Handbuch", Band VII, herausgegeben von Vieweg und Höchtlen, Carl-Hanser-Verlag, München, 1966, beispielsweise auf den Seiten 108 und 109, 453 bis 455 und 507 bis 510 angegeben. Besonders bevorzugt sind überdies Treibmittel, die mit aminischen Kettenverlängerern oder deren Reaktionsprodukten mit Polyisocyanaten unter Gasabspaltung reagieren oder deren Gemische mit obigen Treibmitteln, wie beispielsweise Dikohlensäuredialkylester, Alkylcarbaminate und Leusch'sche Anhydride.

Beispiele für erfindungsgemäß als Vernetzungsmittel bzw. Kettenverlängerungsmittel verwendbare Polyamine sind bisäthoxyliertes Toluylendiamin, 4-Methyl-3,5-diamino-benzoesäureäthylester und ein Mischkondensat von 2,6-Diäthyl- und 2,6-Diisopropylanilin mit Formaldehyd, oder Polyamine ähnlichen $pK_B$-Wertes.

Als Katalysatoren für die Harnstoffbildung können erfindungsgemäß solche der an sich bekannten Art verwendet werden, beispielsweise tertiäre Amine, wie Triäthylamin, Tributylamin, N-Methyl-morpholin, N-Äthyl-morpholin, N-Cocomorpholin, N,N,N',N'-Tetramethyläthylen- diamin, 1,4-Diaza-bicyclo[2.2.2]octan, N-Methyl-N'-dimethylamino-
äthylpiperazin, N,N-Dimethylbenzylamin, Bis(N,N-diäthylaminoäthyl)-
adipat, N,N-Diäthylbenzylamin, Pentamethyldiäthylentriamin,
N,N-Dimethylcyclohexylamin, N,N,N',N'-Tetramethyl-1,3-butandiamin,
N,N-Dimethyl-ß-phenyläthylamin, 1,2-Dimethylimidazol und 2-Methylimidazol. Besonders genannt seien auch saure Katalysatoren der Polyharnstoffbildung, z.B. Adipinsäure, Alkylbenzoesäuren und Phosphorsäuredialkylester.

Beispiele für gegenüber Isocyanatgruppen reaktionsfähige Wasserstoffatome aufweisende tertiäre Amine sind Triäthanolamin,
Triisopropanolamin, N-Methyl-diäthanolamin, N-Äthyl-diäthanolamin,
N,N-Dimethyläthanolamin sowie deren Umsetzungsprodukte mit Alkylenoxiden wie Propylenoxid und/oder Äthylenoxid.

Als Katalysatoren können ferner Siloamine mit Kohlenstoff-Silicium-
Bindungen verwendet werden, wie sie beispielsweise in der deutschen
Patentschrift 1 229 290 beschrieben sind. Geeignete Beispiele
hierfür sind 2,2,4-Trimethyl-2-silamorpholin und 1,3-Diäthylaminomethyltetramethyldisiloxan.

Als Katalysatoren ebenfalls verwendbar sind stickstoffhaltige
Basen, wie Tetraalkylammoniumhydroxide sowie Alkalihydroxide
wie Natriumhydroxid, Alkaliphenolate wie Natriumphenolat oder
Alkalialkoholate wie Natriummethylat. Auch Hexahydrotriazine
können als Katalysatoren eingesetzt werden. Auch organische
Metallverbindungen, insbesondere organische Zinnverbindungen,
können als Katalysatoren verwendet werden. Bevorzugte Beispiele für erfindungsgemäß verwendbare organische Zinnverbindungen sind Zinn(II)salze von Carbonsäuren, wie Zinn(II)acetat, Zinn(II)octoat, Zinn(II)äthylhexoat und Zinn(II)laurat, sowie die Dialkylzinnsalze von Carbonsäuren, wie Dibutylzinndiacetat, Dibutylzinndilaurat, Dibutylzinnmaleat und Dioctylzinndiacetat.

Weitere Vertreter von erfindungsgemäß verwendbaren Katalysatoren sowie Einzelheiten über die Wirkungsweise der Katalysatoren sind im "Kunststoff-Handbuch", Band VII, herausgegeben von Vieweg und Höchtlen, Carl-Hanser-Verlag, München, 1966, beispielsweise auf den Seiten 96 bis 102, zu finden.

Die Katalysatoren werden in der Regel in einer Menge zwischen etwa 0,001 und 10 Gew.-%, bezogen auf die Menge der Verbindungen mit mindestens zwei gegenüber Isocyanaten reaktionsfähigen Wasserstoffatomen mit einem Molekulargewicht von 400 bis 10 000, eingesetzt.

Wunschgemäß können die erfindungsgemäßen Produkte auch oberflächenaktive Zusatzstoffe, z.B. Emulgatoren und Schaumstabilisatoren, enthalten. Beispiele für verwendbare Emulgatoren sind die Natriumsalze von Rizinusölsulfonaten oder auch von Fettsäuren oder Salze von Fettsäuren mit Aminen, wie ölsaures Diäthylamin oder stearinsaures Diäthanolamin. Auch Alkali- und Ammoniumsalze von Sulfonsäuren, wie etwa von Dodecylbenzolsulfonsäure und Dinaphthylmethandisulfonsäuren, oder auch von Fettsäuren, wie Rizinolsäure, oder von polymeren Fettsäuren können als oberflächenaktive Zusatzstoffe verwendet werden.

Beispiele für erfindungsgemäß verwendbare Schaumstabilisatoren sind insbesondere wasserlösliche Polyäthersiloxane. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind beispielsweise in der US-Patentschrift 2 764 565 beschrieben.

Erfindungsgemäß können auch Reaktionsverzögerer, beispielsweise sauer reagierende Stoffe, wie Salzsäure oder organische Säurehalogenide, sowie Zellregler der an sich bekannten Art wie Paraffine oder Fettalkohole oder Dimethylpolysiloxane sowie Pigmente oder Farbstoffe und Flammschutzmittel der an sich bekannten Art, wie z.B. Trischloräthylphosphat oder Ammoniumphosphat und Polyphosphat sowie Stabilisatoren gegen Alterungs- und Witterungseinflusse, Weichmacher und fungistatisch und bakteriostatisch wirkende Substanzen, Füllstoffe, wie Bariumsulfat, Kieselgur, Ruß und Schlämmkreide, verwendet werden.

Weitere Beispiele für erfindungsgemäß verwendbare oberflächenaktive Zusatzstoffe und Schaumstabilisatoren sowie Zellregler, Reaktionsverzögerer, Stabilisatoren, flammhemmende Substanzen, Weichmacher, Farbstoffe und Füllstoffe sowie fungistatisch und bakteriostatisch wirksame Substanzen und Einzelheiten über die Verwendungs- und Wirkungsweise dieser Zusätze sind in dem "Kunststoff-Handbuch", Band VI, herausgegeben von Vieweg und Höchtlen, Carl-Hanser-Verlag, München, 1966, beispielsweise auf den Seiten 103 bis 113 zu finden.

Die Erfindung wird durch die folgenden Beispiele näher erläutert.

ohne jedoch darauf beschränkt zu sein. Die darin angegebenen Teile beziehen sich, wenn nichts anderes angegeben ist, auf Gewichtsteile.

Beispiel 1

80 Teile eines Prepolymergemisches auf Basis von Polypropylenoxidpolyolen und Desmodur T (Isomerenverhältnis: 65 % 2,4-Isomeres und 35 % 2,6-Isomeres) mit 4,8 Gew.-% freiem NCO werden bei 55°C mit 1,6 Teilen Dikohlensäurediäthylester unter Verwendung eines hochtourigen Rührwerkes innerhalb von 5 Sekunden homogenisiert. Anschließend werden bei dieser Temperatur 10,0 g bisäthoxyliertes Toluylendiamin zugesetzt und 10 Sekunden lang homogenisiert. Danach wird in eine verschließbare Form gegossen, die ebenfalls temperiert (55°C) ist.

| | |
|---|---|
| Startzeit des Systems: | etwa 20 Sek. |
| Abbindezeit: | 2 Min. |
| Nachheizzeit nach dem Entformen | 12 Std. bei 80°C |
| $V_{Form}$ | 176 cm$^3$ |
| $G_{Schaum}$ | 83 p |
| $\rho_{Schaum}$ | 0,47 g/cm$^3$ |

Der Schaum zeigt unter Wasser, wenn er auf 80 % komprimiert und entspannt wird, eine Wasseraufnahme von weniger als 5 Gew.-% und er hält wiederholtes Komprimieren auf 80 % nahezu ohne Druckverformung (bleibende Verformung) aus.

Beispiel 2

Man arbeitet wie in Beispiel 1, diesmal jedoch unter Verwendung
von 93,8 Teilen des Prepolymeren, 1,8 Teilen Dikohlensäurediäthylester und 11,74 Teilen des gleichen Polyamin-Kettenverlängerungsmittels wie in Beispiel 1.

| | |
|---|---|
| $\varrho$ Schaum | 0,54 g/cm$^3$ |
| Wasseraufnahme | 1 Gew.-% |
| Schrumpfwert | 1,3 % |

Auch dieser Elastomerschaum verträgt wiederholtes Komprimieren
auf 80 % ohne wesentliche Druckverformung (bleibende Verformung).

Beispiel 3

Man arbeitet wie in Beispiel 1, diesmal jedoch unter Verwendung
der äquivalenten Menge des 4-Methyl-3,5-diaminobenzoesäure-2-
ethylhexylesters als Polyamin-Kettenverlängerungsmittel. Dabei erhält man einen Elastomerschaum mit einer Dichte $\varrho$ von 0,49 g/cm$^3$.

Die Stauchhärte dieses Elastomerschaums ist höher als die in
Beispiel 1 angegebene und er übersteht ebenfalls wiederholtes
Komprimieren auf 80 % ohne wesentliche Druckverformung (bleibende
Verformung).

## Beispiel 4

Zur Herstellung eines Federelement-Körpers werden 800 g eines Prepolymers gemäß Beispiel 1, 16 g Dikohlensäurediäthylester und 100 g bisäthoxyliertes Toluylen-2,4-diamin wie in Beispiel 1 miteinander vermischt und in eine Schließe in Form eines Stoßstangenhorns gegossen. Dabei erhält man einen Elastomer-strukturschaum mit einer Dichte $\varrho$ von 0,47 g/cm$^3$. Die vollständige Rückstellung ist aus den beigefügten Kraft/Weg-Diagrammen 1 und 2 ersichtlich, auf denen für einen Kraftbereich von 0 bis 50 KN die Verformung in mm bei Anwendung einer Zusammendrückge-schwindigkeit von 50 mm/Min. bzw. 600 mm/Min. angegeben ist.

## Beispiel 5

938 g eines Prepolymers gemäß Beispiel 1, 18 g Dikohlensäurediäthylester und 117,4 g Polyamin-Kettenverlängerungsmittel gemäß Beispiel 4 werden wie in den Beispielen 1 und 4 behandelt. Dabei erhält man einen Elastomerstrukturschaum mit einer Dichte $\varrho$ von 0,54 g/cm$^3$. Die vollständige Rückstellung ist aus den beige-fügten Kraft/Weg-Diagrammen 3 und 4 (entsprechend den Diagrammen 1 und 2) ersichtlich.

## Beispiel 6

Man arbeitet wie in Beispiel 4, diesmal jedoch unter Verwendung von 154,5 g eines Polyamin-Kettenverlängerungsmittels, das durch Mischkondensation von 2,6-Diäthyl- und 2,6-Diisopropylanilin mit Formaldehyd hergestellt worden ist. Man erhält einen Elastomer-

strukturschaum mit einer Dichte $\rho$ von 0,48 g/cm$^3$, der ebenfalls ein nahezu ideales Rückstellungsvermögen besitzt.

Beispiel 7

Das Strukturschaumsystem gemäß Beispiel 1 wird unter Wasser komprimiert (auf 20 % des Ausgangsvolumens) und dann unter Wasser entspannt. Nach dem Herausnehmen aus dem Wasserbad wird gewogen. Auf diese Weise wird die aufgenommene Wassermenge als Funktion der Dichte bestimmt.

| Zylinderhohlform | 363 ml |
|---|---|
| $\rho_{Elastomerschaum}$ (g/cm$^3$) | g H$_2$O/Formteil |
| 0,415 | 66 |
| 0,459 | 6 |
| 0,503 | 1 |
| 0,557 | 1 |
| 0,595 | 1 |

Die vorstehenden Daten zeigen die geringe Wasseraufnahme des erfindungsgemäßen Elastomerschaums bei geringer Dichte.

Beispiel 8

Das Elastomerschaumsystem gemäß Beispiel 1 ist ohne wesentlichen Abfall der mechanischen Werte variierbar und die Einfriertemperaturen (bestimmt unter Anwendung des Torsionsschwingungsversuchs nach DIN 53455) sind durch die mittleren Molekulargewichte der Polypropylenoxidpolyole und der Gemische davon einstellbar:

| $\overline{M}$ [g/2 Mol OH] | Glastemperatur ($^{o}$C) |
|---|---|
| 1400 | -31 |
| 1600 | -37 |
| 1900 | -46 |

Aus den vorstehenden Daten geht das gute Tieftemperaturverhalten der erfindungsgemäßen Strukturelastomerschäume hervor.

Die Erfindung wurde zwar vorstehend unter Bezugnahme auf bevorzugte Ausführungsformen näher erläutert, es ist jedoch für den Fachmann selbstverständlich, daß sie darauf keineswegs beschränkt ist, sondern daß diese in vielfacher Hinsicht abgeändert und modifiziert werden können, ohne daß dadurch der Rahmen der vorliegenden Erfindung verlassen wird.

-- . --

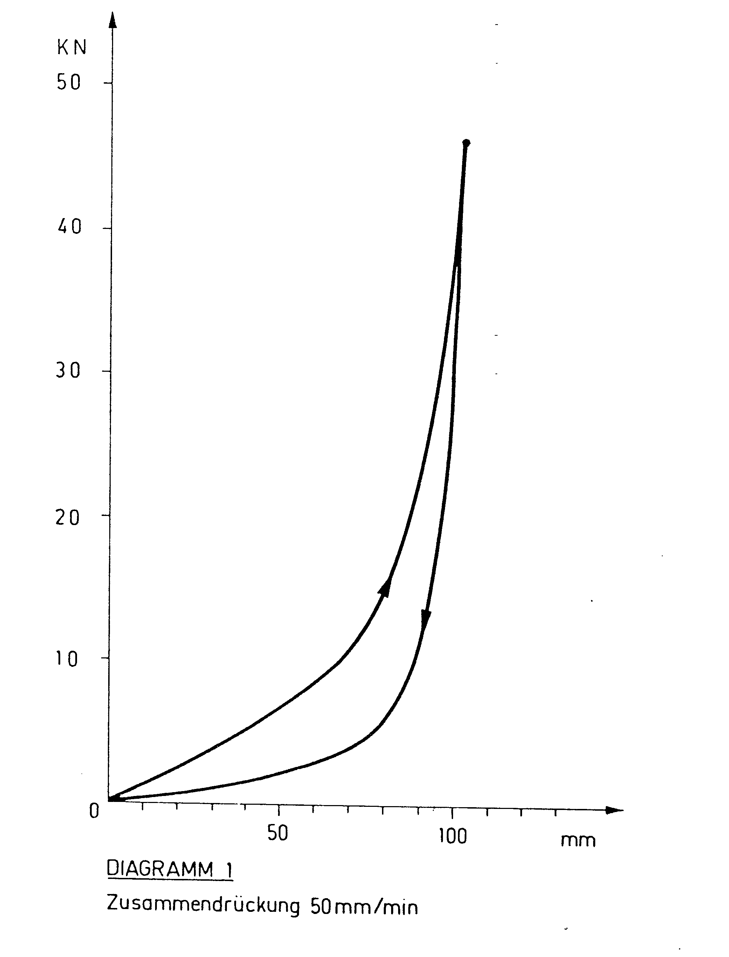

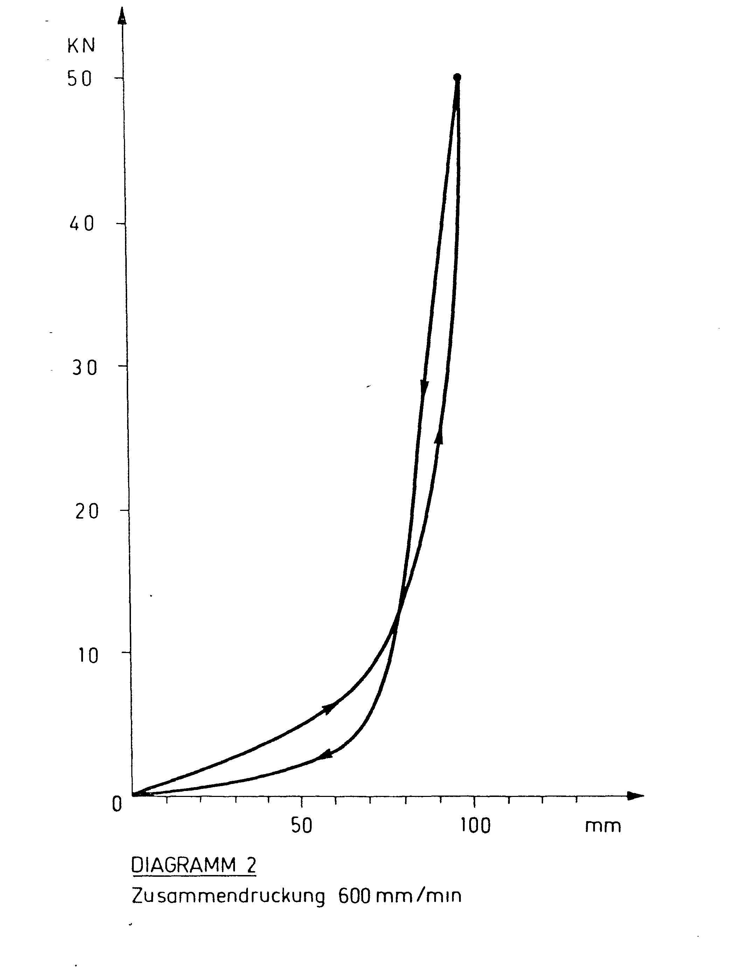

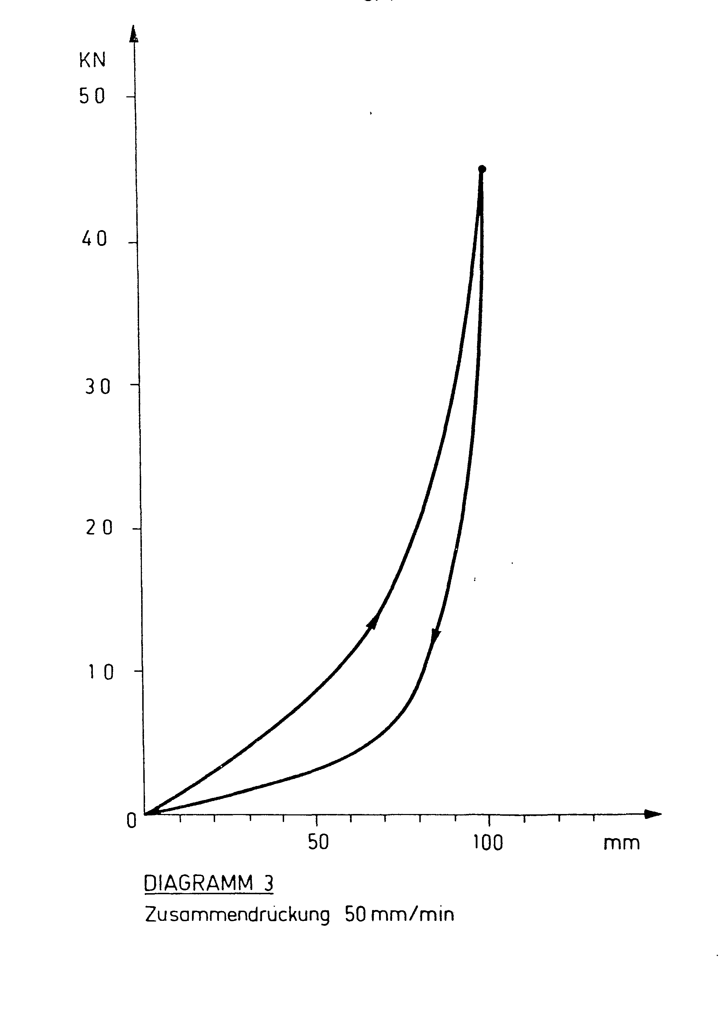

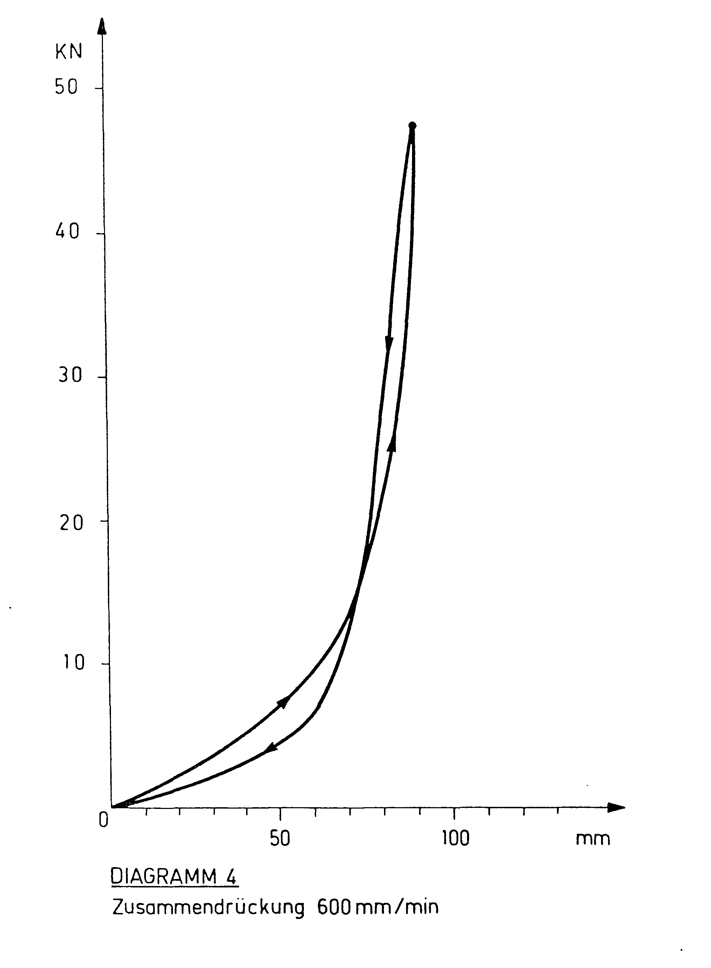

Patentansprüche

1. Durch Verschäumen eines mit einem Polyamin-Kettenverlängerungsmittel vernetzbaren Polyurethan- und/oder Polyharnstoff-Prepolymeren in Gegenwart eines Treibmittels hergestellter, offen- und/oder geschlossenzelliger Elastomerschaum, d a d u r c h  g e - k e n n z e i c h n e t ,  daß das Treibmittel zumindest anteilig eine Gas bildende Komponente enthält, die mit dem Polyamin-Kettenverlängerungsmittel oder dessen Umsetzungsprodukten mit Polyisocyanaten reaktionsfähig ist.

2. Verfahren zur Herstellung eines offen- und/oder geschlossenzelligen Elastomerschaums durch Verschäumen eines mit einem Polyamin-Kettenverlängerungsmittel vernetzbaren Polyurethan- und/oder Polyharnstoff-Prepolymeren in Gegenwart eines Treibmittels, dadurch gekennzeichnet, daß das Treibmittel zumindest anteilig eine Gas bildende Komponente enthält, die mit dem Polyamin-Kettenverlängerungsmittel oder dessen Umsetzungsprodukten mit Polyisocyanaten reaktionsfähig ist.

3. Verfahren nach Anspruch 2, dadurch gekennzeichnet, daß als Polyamin-Kettenverlängerungsmittel bisäthoxyliertes Toluylendiamin verwendet wird.

4. Verfahren nach Anspruch 2, dadurch gekennzeichnet, daß als Polyamin-Kettenverlängerungsmittel ein 4-Methyl-3,5-diamino-benzoesäureester verwendet wird.

5. Verfahren nach Anspruch 2, dadurch gekennzeichnet, daß als Polyamin-Kettenverlängerungsmittel ein Mischkondensat von 2,6-Diäthyl- und 2,6-Diisopropylanilin mit Formaldehyd verwendet wird.

6. Verfahren nach einem der Ansprüche 2 bis 5, dadurch gekennzeichnet, daß das Polyamin-Kettenverlängerungsmittel mit dem Prepolymeren allein bei 55 $^O$C eine Reaktionszeit von < 30 Sekunden, insbesondere < 20 Sekunden, und eine Entformungszeit von < 3 Minuten, insbesondere < 2 Minuten, hat.

7. Verfahren nach einem der Ansprüche 2 bis 6, dadurch gekennzeichnet, daß als Gas bildende Komponente ein Dikohlensäuredialkylester, insbesondere Dikohlensäurediäthylester, verwendet wird.

8. Verfahren nach einem der Ansprüche 2 bis 6, dadurch gekennzeichnet, das als Gas bildende Komponente in dem Prepolymeren suspendiertes Isatosäureanhydrid verwendet wird.

9. Verfahren nach einem der Ansprüche 2 bis 6, dadurch gekennzeichnet, daß als Gas bildende Komponente Ameisensäure bzw. eine wäßrige Lösung von Ameisensäure verwendet wird.

10. Verfahren nach einem der Ansprüche 2 bis 6, dadurch gekennzeichnet, daß als Gas bildende Komponente Carbaminate verwendet werden.

1/4

DIAGRAMM 1

Zusammendrückung 50 mm/min

DIAGRAMM 2
Zusammendruckung  600 mm/min

3/4

DIAGRAMM 3
Zusammendrückung 50 mm/min

0022994

4/4

**DIAGRAMM 4**
Zusammendrückung 600 mm/min

Nummer der Anmeldung

EP 80 10 4002.3

Europäisches
Patentamt

**EUROPÄISCHER RECHERCHENBERICHT**

| | EINSCHLÄGIGE DOKUMENTE | | | KLASSIFIKATION DER ANMELDUNG (Int.Cl.3) |
|---|---|---|---|---|
| Kategorie | Kennzeichnung des Dokuments mit Angabe, soweit erforderlich, der maßgeblichen Teile | betrifft Anspruch | | |
| | DE - A - 2 156 477 (BAYER) <br> * Anspruch 1; Seite 25, Beispiel; Seite 11, Zeilen 6, 7 * <br> -- | 1,2, 5,7 | | C 08 G 18/14 <br> C 08 G 18/32 <br> C 08 G 18/10 <br> C 08 J 9/06 |
| A | DE - A1 - 2 524 834 (BAYER) <br> * Ansprüche 1, 2; Seite 7, Zeilen 12 bis 14 * <br> -- | 1,2, 7 | | |
| A | DE - A - 2 132 102 (GRACE & CO.) <br> * Ansprüche 1, 3, 4; Seite 2, Absatz 2 * <br> -- | 1,2 | | RECHERCHIERTE SACHGEBIETE (Int. Cl.3) |
| A | GB - A - 1 223 624 (DU PONT DE NEMOURS) <br> * Anspruch 1; Seite 2, Zeilen 3 bis 12 * <br> -- | 1,2 | | C 08 G 18/00 <br> C 08 J 9/00 <br> C 08 L 75/00 |
| A | DE - A - 2 160 589 (BAYER) <br> * Ansprüche 3, 6, 7, 8; Seite 14, Beispiel 9 * <br> -- | 4 | | |
| A | DE - A - 2 126 146 (BAYER) <br> * Ansprüche 1, 4; Seite 4, Zeilen 11, 22 * <br> ---- | 8 | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort <br> Berlin | Abschlußdatum der Recherche <br> 23-10-1980 | Prüfer <br> MARX |
|---|---|---|

EPA form 1503.1   06.78